# EUROPÄISCHE PATENTSCHRIFT

(11) **EP 0 636 333 B1**
(45) Veröffentlichungstag und Bekanntmachung des Hinweises auf die Patenterteilung: **22.10.1997**
(21) Anmeldenummer: 94109530.9
(22) Anmeldetag: 21.06.1994
(51) Int. Cl.: A47J 31/54, A47J 31/34

(54) **Verfahren zum Aufbrühen von Kaffee in einem Frischbrühautomaten, sowie Vorrichtung zur Durchführung des Verfahrens**
Method and device for automatically brewing coffee
Procédé et appareil à préparer du café automatiquement

(30) Priorität: 26.07.1993 DE 4324986
(43) Veröffentlichungstag der Anmeldung: 01.02.1995
(73) Patentinhaber: A. und K. MÜLLER GmbH & Co. KG, D-40593 Düsseldorf (DE)
(72) Erfinder: Moldenhauer, Hermann, D-40625 Düsseldorf (DE)
(74) Vertreter: Feder, Wolf-Dietrich, Dr. Dipl.-Phys.

(56) Entgegenhaltungen:
- EP-A- 0 342 516
- DE-A- 1 579 442
- DE-A- 3 102 724
- DE-U- 8 717 039
- FR-A- 1 571 417
- GB-A- 1 107 867
- GB-A- 1 510 114

## Beschreibung

Die Erfindung betrifft ein Verfahren zum Aufbrühen von Kaffee in einem Frischbrühautomaten in abgemessenen Kleinportionen, bei welchem durch eine vorgegebene Menge gemahlenen Kaffees eine vorgegebene Menge mittels einer Heizvorrichtung erhitztes Brühwasser gepreßt wird, wobei zunächst eine im wesentlichen einer Kleinportion Kaffees entsprechende vorgegebene Menge Kaltwasser automatisch genau dosiert bereitgestellt und der Heizvorrichtung im Durchlaufverfahren zugeführt wird. Ein derartiges verfahren sowie eine Vorrichtung zu seiner Durchführung ist in dem Dokument FR-A- 1 571 417 beschrieben.

Bei bekannten Frischbrühautomaten wird in der Regel das Brühwasser in einem drucklosen Boiler erhitzt und unterhalb des Siedepunktes thermostatisch geregelt. Beim Aufbrühen von Kaffee wird das Brühwasser durch Ventile an die Brühkammer abgegeben, in welche das Kaffeemehl zuvor portioniert eingegeben wurde. Die Brühwassermenge wird dann mit einem Kolben mechanisch durch das Kaffeemehl gepreßt und dem Trinkbecher zugeleitet. Bei dieser bekannten Art der Zubereitung muß mit einem merklichen Temperaturgefälle gerechnet werden, so daß im Kaffeebett Brühwassertemperaturen zwischen 80°C und 90°C herrschen. Bei diesen Brühwassertemperaturen wird das Kaffeemehl nicht ausgenutzt und wichtige Aromastoffe bleiben in ihm zurück. Es ist bekannt, daß die optimale Brühwassertemperatur zwischen 92° und 98°C liegt. Eine solche Brühwassertemperatur kann aber mit den bekannten Verfahren zum Aufbrühen von Kaffee in einem Frischbrühautomaten nicht ohne weiteres erreicht werden.

Der Erfindung liegt die Aufgabe zugrunde, ein Verfahren der eingangs erwähnten Art zu schaffen, mit dem in einfacher Weise eine ausreichend hohe Brühwassertemperatur innerhalb des Kaffeebetts sichergestellt werden kann. Das Verfahren sollte in konstruktiv einfacher Weise durchführbar sein.

Die Erfindung betrifft daher weiterhin eine Vorrichtung zur Durchführung des erfindungsgemäßen Verfahrens.

Insgesamt sollten mit dem erfindungsgemäßen Verfahren und der erfindungsgemäßen Vorrichtung folgende Vorteile erzielt werden:
- Erzielung einer ausreichend hohen Brühwassertemperatur im Kaffeebett;
- möglichst genaue Führung der Brühwassertemperatur;
- möglichst genaue Dosierung der Brühwassermenge;
- Verzicht auf den Brühwasserboiler bekannter Vorrichtungen;
- kleinstmögliche Baugröße des kompl. Frischbrühautomaten;
- servicefreundliche Konstruktion des Frischbrühaustomaten;
- verkalkungsarme und ernergiesparende Brühwasserzubereitung;
- optimale Ausnutzung des eingesetzten Kaffeemehls;
- sensorisch einwandfreie Kaffeequalität;
- Möglichkeit einer ventillosen Heißwasserausgabe.

Die Lösung dieser Aufgabe erfolgt erfindungsgemäß mit einem Verfahren, das die Merkmale aus dem kennzeichnenden Teil des Patentanspruchs 1 aufweist.

Eine Vorrichtung zur Durchführung des erfindungsgemäßen Verfahrens ist Gegenstand von Patentanspruch 2. Vorteilhafte Weiterbildungen dieser Vorrichtung sind in den Ansprüchen 3 bis 7 beschrieben.

Bei der erfindungsgemäßen Vorrichtung ist zur genauen Dosierung des Brühwassers mit Vorteil eine Dosiereinrichtung zur Erfassung und Abgabe eines vorgegebenen Volumens eines inkompressiblen Mediums einsetzbar, wie sie beispielsweise in der DE-A 31 02 724 beschrieben ist. Es sind aber auch andere Dosiertechniken anwendbar, wie beispielsweise die Kombination eines Druckminderers mit einer Blende, die ebenfalls einen genauen Mediumstrom liefern, aber durch Variation von Fließwiderständen im Kaffeebett zu Dosierschwankungen führen können. Eine volumetrische Dosierung ist daher in jedem Fall vorteilhaft. Diese Dosierung kann mechanisch oder durch Messen des Volumenstroms erfolgen. Die obengenannte bekannte Dosiereinrichtung hat den Vorteil, daß sie vom Netzwasserdruck betrieben ist und auf einen elektrischen Impuls hin eine genau einstellbare oder vorwählbare Menge Kaltwasser abgibt. Dabei ist die Dosiergenauigkeit unabhängig vom momentanen Druck des zugeführten Wassers.

Bei dem erfindungsgemäßen Verfahren muß die dosierte Menge Kaltwasser für den Brühvorgang bis zum Siedepunkt aufgeheizt werden. Dabei muß für die Dimensionierung einer Heizvorrichtung von folgenden Bedingungen ausgegangen werden:
- Kaltwasser 10 bis 15°C;
- Dosierzeit 20 bis 25 Sekunden;
- Wassermenge 150 bis 160 ml.

Bei diesen vorgegebenen Werten ist ein Erhitzen der vorgegebenen Wassermenge bis zum Siedepunkt und ein Verdampfen der Restwassermenge im üblichen Durchlaufverfahren nur möglich, wenn ein ausreichend hoher elektrischer Anschlußwert zur Verfügung steht. Der Anschlußwert einer normalen einphasigen Steckdose liegt aber bei 3,6 KW und mit diesem Anschlußwert sind die obenangegebenen Dosierzeiten nicht zu erreichen.

Daher wird bei dem erfindungsgemäßen Verfahren und der erfindungsgemäßen Vorrichtung die der vorgegebenen Menge Kaltwasser zuzuführende Wärmemenge über einen, an einer Heizvorrichtung angeschlossenen Wärmespeicher mit vorgegebenem Speicherinhalt zugeführt. In diesem Wärmespeicher wird, bedingt durch die Masse des Speichers, eine Wärmemenge gespeichert, die zusätzlich zur während der Dosierung elektrisch zugeführten Energie zur Erwärmung der vorgegebenen Menge Kaltwasser erforderlich ist. Bei einem besonders vorteilhaften Ausführungsbeispiel der Erfindung können die obengenannten Bedingungen beispielsweise mit einem Wärmespeicher erreicht werden, der einen auf ca. 115°C aufgeheizten Aluminiumblock mit einer Masse von ca. 0,6kg aufweist. Dieser Wärmespeicher wird in einem Stand-By-Betrieb auf die Temperatur von 115°C gebracht und von der Heizvorrichtung aus durch eine zeit- und temperaturgesteuerte Ansteuerung auf diesem Wert gehalten. Die Ansteuerung folgt dabei in Schwingungspaketen aus dem Netz. Die Isttemperatur wird an einem Temperaturfühler innerhalb des Wärmespeichers ermittelt, von einer Leistungselektronik ausgewertet und in die Puls-Pausenverhältnisse für die Schwingungspakete umgesetzt.

Dieser Wärmespeicher ist Teil der erfindungsgemäßen Erhitzungsvorrichtung, deren Erhitzungskammer unmittelbar als durch den obengenannten Metallblock hindurchlaufender Durchtrittskanal ausgebildet sein kann. Der Durchtrittskanal kann dabei spiralförmig, schraubenlinienförmig oder mäanderförmig durch den Metallblock geführt sein. Er besitzt am Anfang einen an die Dosiereinrichtung angeschlossenen Zulauf und am Ende einen an die eigentliche Brühkammer angeschlossenen Ablauf. Im Stand-By-Betrieb ist die Erhitzungskammer trocken und wird erst mit dem Beginn der Dosierung mit Wasser beaufschlagt. Zeitgleich mit dem Start der Dosierung kann die Heizvorrichtung voll durchgesteuert werden zur maximalen Zuführung weiterer elektrischer Energie. Dieser Zustand kann während der gesamten Dosierung aufrechterhalten werden. Während der Dosierung sinkt die Temperatur des Wärmespeichers auf einen Wert unterhalb des Siedepunktes, beispielsweise 95°C ab. Nach Abschluß der Dosierung wird der Wärmespeicher und damit die Erhitzungskammer wieder auf die Temperatur von 115°C gebracht, was zur Folge hat, daß die in dar Erhitzungskammer befindliche Restwassermenge verkocht. Diese dem Inhalt der Erhitzungskammer entsprechende Wassermenge geht in die Dosiermenge mit ein, kann aber gering gehalten werden und soll 15ml nicht übersteigen. Die eigentliche Dosiermenge wird von der Dosiereinrichtung vorgegeben und verlustfrei am Ausgang der Erhitzungsvorrichtung verlustfrei wieder ausgegeben. Nach Erreichen der Nenntemperatur von 115°C im Stand-By-Betrieb ist die Erhitzungsvorrichtung sofort wieder betriebsbereit, da die zu überbrückende Temperaturdifferenz gering ist und beispielsweise nur von 95°C bis 115°C reicht.

Die am Ende des Brühvorganges durch das Verkochen der Restwassermenge entstehende Dampfphase, die ebenfalls abgegeben wird, bringt den besonderen Vorteil mit sich, daß das Kaffeebett in der Brühkammer angetrocknet wird. Somit läßt sich die Brühkammer leicht rückstandslos entleeren.

Es hat sich herausgestellt, daß bei dem erfindungsgemäßen Verfahren der Energieaufwand sehr gering ist. In bekannten Frischbrühautomaten müssen üblicherweise fünf bis acht Liter Brühwasser auf 95°C aufgeheizt und auf dieser Temperatur gehalten werden. Bei dem erfindungsgemäßen Verfahren braucht beispielsweise lediglich eine Masse von 0,6 kg Aluminium auf der angegebenen Temperatur gehalten werden.

Wie weiter unten an Hand eines Ausführungsbeispiels näher erläutert, hat die erfindungsgemäße Vorrichtung den Vorteil, daß die Verkalkungsgefahr stark herabgesetzt ist. Der die Erhitzungskammer enthaltende Metallblock kann aus zwei leicht demontierbaren Hälften bestehen und ist somit leicht zu reinigen. Die Erhitzungskammer selbst bleibt im Stand-By-Betrieb trocken, so daß nur während der Dosierung Härtebildner ausgefällt werden können.

Grundsätzlich benötigt ein Frischbrühautomat, der mit einer Vorrichtung nach der Erfindung ausgerüstet ist, als Einzelgerät kein Ausgabeventil. Wenn es jedoch erwünscht ist, daß der Frischbrühautomat gleichzeitig als Instantautomat verwendet werden soll, kann am Ablauf der Erhitzungsvorrichtung eine Gruppe von Verteilerventilen angeordnet sein. Da die Wassertemperatur zur Herstellung von Instantgetränken niedriger ist als die Temperatur des Brühwassers für Kaffee, ist es sehr leicht möglich, durch eine entsprechende Ansteuerung der Heizvorrichtung eine niedrigere Abgabetemperatur für das Wasser zu erreichen. Wenn beispielsweise während der Dosierphase nicht nachgeheizt wird, beträgt die Temperatur des auslaufenden Wassers ca. 70°C und durch das Auskochen der Restwassermenge kann das Getränk auf übliche 80°C gebracht werden.

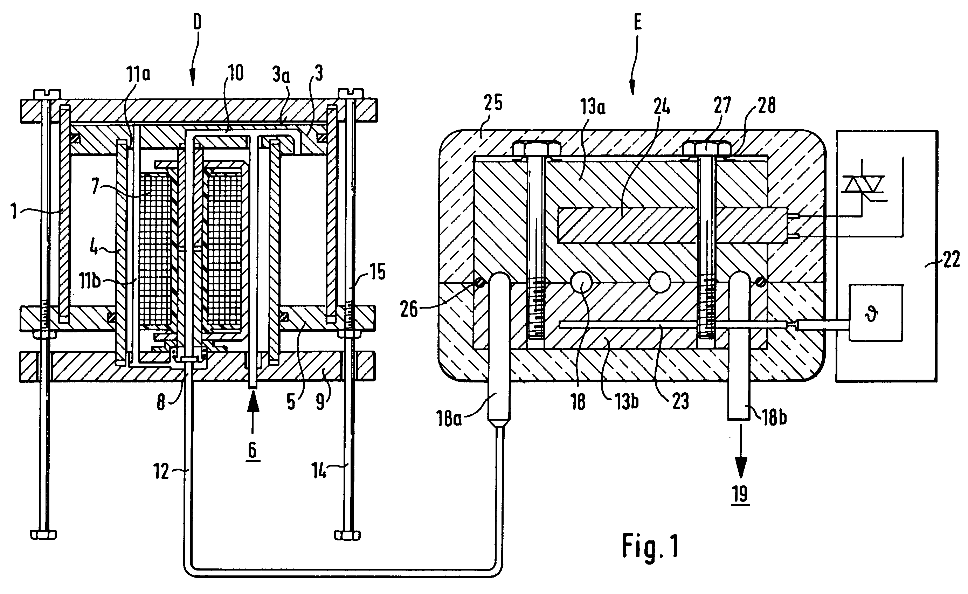

Im folgenden wird an Hand der beigefügten Zeichnungen ein Ausführungsbeispiel für eine Vorrichtung zur Durchführung des erfindungsgemäßen Verfahrens näher erläutert.
In den Zeichnungen zeigen Fig. 1 in einer stark schematisierten Darstellung eine Vorrichtung zum Dosieren und Erhitzen von Brühwasser innerhalb eines Frischbrühautomaten;
Fig. 2 in einer detaillierteren Darstellung die an die Dosiereinrichtung angeschlossene Erhitzungsvorrichtung mit Wärmespeicher;
Fig. 3 die Dosiereinrichtung im Vertikalschnitt im gefüllten Zustand;
Fig. 4 Dosiereinrichtung in einer Darstellung analog Fig. 3 im entleerten Zustand.

Die in Fig. 1 schematisch dargestellte Einrichtung, die in nicht dargestellter Weise Teil eines Frischbrühautomaten zur Herstellung von Kaffee sein kann, umfaßt eine allgemein mit D bezeichnete nur schematisch angedeutete Dosiereinrichtung zur Erfassung und Abgabe eines vorgegebenen Volumens an Kaltwasser, das über eine Leitung 12 einer allgemein mit E bezeichneten Erhitzungseinrichtung zugeführt wird und von dieser über eine Leitung 19 nicht dargestellten Abgabeventilen zugeführt wird, wobei z.B. ein Abgabeventil zur Abgabe von Brühwasser an eine nicht dargestellte Brühkammer gedacht ist, während z. B. ein weiteres Abgabeventil zur Abgabe von Wasser mit beispielsweise 70° Temperatur zur Herstellung von Instantgetränken gedacht sein kann. Die Abgabeventile können in nicht eigens dargestellter und an sich bekannter Weise als von einer Steuervorrichtung aus elektrisch ansteuerbare Magnetventile ausgebildet sein.

Die Erhitzungseinrichtung besitzt einen als Metallblock 13 ausgebildeten Wärmespeicher, durch den die als Durchtrittskanal ausgebildete Erhitzungskammer 18 hindurchgeführt ist, die mit ihrem Zulauf 18a an die Leitung 12 und mit ihrem Ablauf 18b an die Leitung 19 angeschlossen ist.

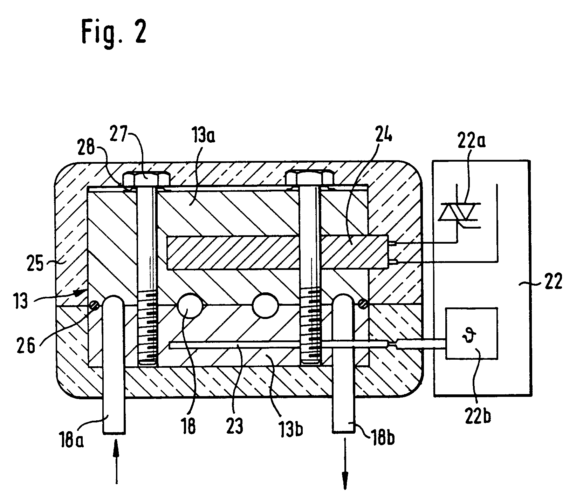

In Fig. 2 ist die Erhitzungseinrichtung E näher dargestellt.

Der Wärmespeicher 13 der Erhitzungseinrichtung besteht aus zwei Teilen 13a und 13b, die mittels Schrauben 27 aneinander befestigt sind. Die als mäanderförmiger Durchtrittskanal ausgebildete Erhitzungskammer 18 ist in die einander berührenden Seiten der beiden Teile 13a und 13b eingearbeitet. Eine umlaufende Dichtung 26 dichtet die beiden Teile 13a und 13b des Metallblocks nach außen ab. Der den Wärmespeicher bildende Metallblock 13 ist an seiner Außenseite von einer wärmeisolierenden Hülle 25 umgeben. Im Oberteil 13a des Wärmespeichers befindet sich ein elektrisches Heizelement 24, das an eine nur angedeutete elektrische Speiseschaltung 22a eines elektrischen Steuergerätes 22 angeschlossen ist. Im Unterteil 13b des Wärmespeichers ist ein Temperatursensor 23 angeordnet, der an eine ebenfalls nur angedeutete Auswerteschaltung 22b innerhalb des Steuergerätes 22 angeschlossen ist. Die Einzelheiten des in an sich bekannter Weise aufgebauten Steuergerätes 22 werden im folgenden nicht näher beschrieben. Die Steuereinrichtung 22 beheizt das Heizelement 24 in Abhängigkeit von eingestellten Vorgabewerten und den über den Temperatursensor 23 gemessenen Temperaturwerten. Wie Fig. 2 genauer zu entnehmen, befindet sich zwischen der oberen Oberfläche des Oberteils 13a des Wärmespeichers und der Innenseite der wärmeisolierenden Hülle 25 ein schmaler Spalt vorgegebener Weite und zwischen den Köpfen der Schrauben 27 und der Oberseite des Oberteils 13a des Wärmespeichers sind Druckfedern 28 angeordnet. Diese Ausgestaltung stellt eine Sicherheitseinrichtung dar. Sollte sich beispielsweise infolge von Kalkablagerungen der Durchtrittskanal 18 verstopfen, so daß Wasser und/oder Dampf nicht mehr durch den Ablauf 18b austreten können, so hebt sich bei einem bestimmten Druck das Oberteil 13a des Wärmespeichers gegen die Kraft der Federelemente 28 ab. Dadurch entsteht ein Spalt zwischen Oberteil 13a und Unterteil 13b, aus dem der Dampf entweichen kann, so daß es nicht zu einem unzulässigen Druckanstieg im Wärmespeicher kommen kann.

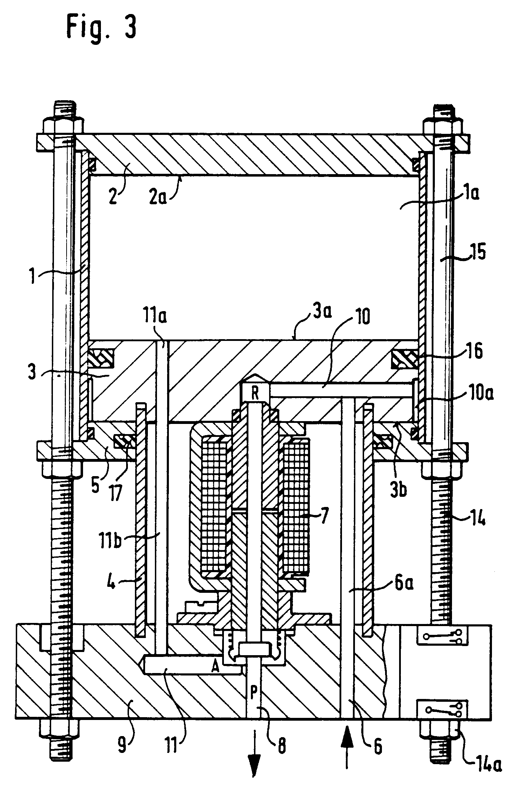

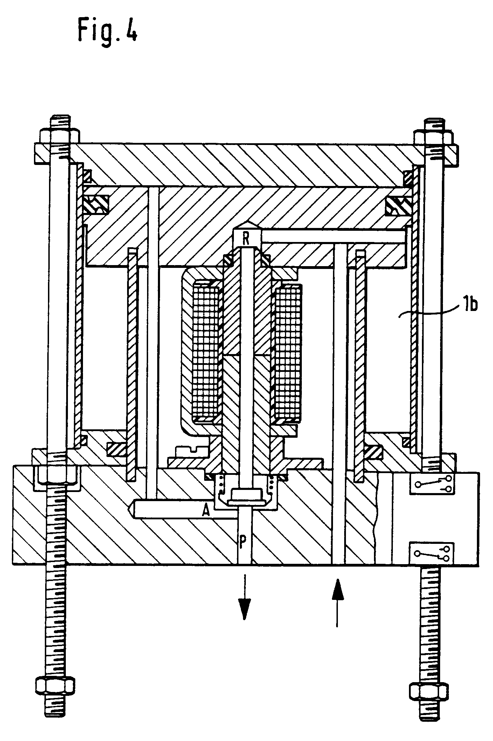

Im folgenden wird an Hand der Fig. 3 und 4 die Dosiereinrichtung D näher erläutert.

Sie besitzt eine Grundplatte 9, auf die ein Hohlzylinder 4 aufgesetzt ist, an dessen oberem Ende ein Kolben 3 angeordnet ist. Innerhalb des Hohlzylinders 4 ist zwischen Grundplatte 9 und Kolben 3 ein elektromagnetisch betätigbares 3/2-Wegeventil 7 angeordnet. Dieses Ventil kann von einem Typ sein, wie er beispielsweise in der DE-OS 28 55 902 beschrieben ist und wird im folgenden nicht näher erläutert.

Über dem Kolben 3 ist ein Zylinder 1 angeordnet, der an der Mantelfläche des Kolbens 3, in welcher Dichtungen 16 angeordnet sind, gleitend geführt ist. Der Zylinder 1 ist an seiner oberen Stirnseite durch eine Abschlußplatte 2 abgeschlossen, während an seiner unteren Stirnseite eine Ringplatte 5 angeordnet ist, die an der äußeren Mantelfläche des mit der Grundplatte 9 verbundenen Zylinders 4 in axialer Richtung verschiebbar geführt ist, wobei in der Ringplatte 5 angeordnete Dichtungen 17 für einen flüssigkeitsdichten Abschluß an dieser Stelle sorgen. Das aus der Abschlußplatte 2, dem Zylinder 1 und der Ringplatte 5 bestehende Bauteil wird durch Schraubenbolzen 15 zusammengehalten. Dieses Bauteil ist als Ganzes über dem Kolben 3 verschiebbar. Die Schraubenbolzen 15 sind in Richtung auf die Grundplatte 9 über die Ringplatte 5 hinaus verlängert und diese als Führungsstangen 14 dienenden Verlängerungen sind durch Bohrungen der Grundplatte 9 hindurchgeführt und tragen an ihrem äußeren Ende Anschlagmuttern 14a. Der Innenraum des Zylinders 1 wird im folgenden als "Dosierraum" 1a bezeichnet. Sein Durchmesser entspricht dem vollen Zylinderdurchmesser. Der Dosierraum 1a wird begrenzt von der vorderen Arbeitsfläche 3a des Kolbens 3 und der Innenfläche 2a der Abschlußplatte 2.

Wie aus Fig. 4 ersichtlich, bildet sich bei einer Bewegung des Zylinders 1 in Abwärtsrichtung zwischen der unteren Arbeitsfläche 3b des Kolbens 3 und der Innenfläche der Ringplatte 5 ein Ringraum, der im folgenden als "Rückstellraum" 1b bezeichnet wird.

Eine, an ein nicht dargestelltes Zuleitungssystem anschließbare Flüssigkeitszuleitung 6 ist durch die Grundplatte 9 und ein Verbindungsrohr 6a in den Kolben 3 hineingeführt und dort an eine Verbindungsleitung 10 angeschlossen, welche von dem Ein/Ausgang R des Ventils 7 durch den Kolben 3 hindurch zu einer Austrittsöffnung 10a an der Unterseite 3b des Kolbens 3 führt. Diese Austrittsöffnung 10a öffnet sich nach unten, also zum Rückstellraum 1b hin. Eine, wie aus Fig. 1 zu ersehen, an die Verbindungsleitung 12 zur Erhitzungsvorrichtung E angeschlossene Flüssigkeitsableitung 8 ist durch die Grundplatte 9 zum Auslauf P des Ventils 7 geführt. Eine Verbindungsleitung 11 ist vom Ein/Auslauf A des Ventils 7 durch die Grundplatte 9, ein Rohr 11b und einen im Kolben 3 verlaufenden Abschnitt 11a zum Dosierraum 1a geführt. Der Abschnitt 11a mündet an der vorderen Arbeitsfläche 3a des Kolbens 3 in den Dosierraum 1a. Auf diese Weise wird die Ein/Austrittsöffnung des Abschnittes 11a, wie aus Fig. 4 ersichtlich, bei vollständiger Entleerung des Dosierraums 1a von der Innenfläche 2a der Abschlußplatte 2 verschlossen. Die Ansteuerung des Magnetventils 7 kann, in nicht eigens dargestellter Weise, von einer elektrischen Steuerschaltung aus geschehen.

Die Funktionsweise der in den Fig. 3 und 4 beschriebenen Dosiereinrichtung ist folgende:

Befindet sich die Vorrichtung in dem in Fig. 4 dargestellten Zustand, in dem der Dosierraum 1a nicht gefüllt ist, so ist die Magnetspule des Magnetventils 7 nicht erregt und der Auslauf P durch den Ventilteller des Ventils verschlossen. Das unter Druck stehende Wasser gelangt über die Zuleitung 6 und die Verbindungsleitung 10 durch das Ventil hindurch und weiter über die Verbindungsleitung 11 zum Dosierraum 1a. Der anstehende Druck beaufschlagt sowohl die vordere Arbeitsfläche 3a als auch die hintere Arbeitsfläche 3b des Kolbens 3. Da die Arbeitsfläche 3a im gewählten Ausführungsbeispiel etwa doppelt so groß ist wie die Arbeitsfläche 3b entsteht eine Kraftwirkung, die das aus dem Zylinder 1 der Abschlußplatte 2 der Kreis ringplatte 5 bestehende Bauteil anhebt, wobei der Dosierraum 1a mit Wasser gefüllt wird. Dieses Wasser stammt zur einen Hälfte aus dem Rückstellraum 1b und zur anderen aus der Zuleitung 6. Gleichzeitig mit dem Zylinder 1 wird die Steuerstange 14 angehoben. Sobald der Dosierraum 1a, wie in Fig. 3 dargestellt, vollständig gefüllt ist, wird die Magnetspule des Ventils 7 erregt. Dadurch wird der Dosierraum 1a über die Verbindungsleitung 11, den Ein/Ausgang A und Auslauf P des Ventils 7 mit der Flüssigkeitsableitung 8 verbunden, während über die Flüssigkeitszuleitung 6 der Leitungsdruck weiterhin über den Rückstellraum 1b die hintere Arbeitsfläche 3b des Kolbens 3 beaufschlagt. Hierdurch wird der Rückstellraum nunmehr allein über die Flüssigkeitszuleitung 6 aufgefüllt, und der Inhalt des Dosierraumes 1a wird unter dem anstehenden Wasserdruck entleert. Dieser Entleerungsvorgang bleibt aufrechterhalten, bis die Magnetspule 7 wieder entregt wird. Sobald die Magnetspule des Ventils 7 entregt ist, setzt der nächste Füllvorgang des Dosierraumes 1a in der oben beschriebenen Weise wieder ein.

Mit der beschriebenen Dosiereinrichtung ist eine genaue volumetrische Dosierung möglich, die unabhängig von Leitungsdruckschwankungen ist.

## Patentansprüche

1. Verfahren zum Aufbrühen von Kaffee in einem Frischbrühautomaten in abgemessenen Kleinportionen, bei welchem durch eine vorgegebene Menge gemahlenen Kaffees eine vorgegebene Menge mittels einer Heizvorrichtung erhitztes Brühwasser gepreßt wird, wobei zunächst eine im wesentlichen einer Kleinportion Kaffees entsprechende vorgegebene Menge Kaltwasser automatisch genau dosiert bereitgestellt und der Heizvorrichtung im Durchlaufverfahren zugeführt wird, dadurch gekennzeichnet, daß der vorgegebenen Menge Kaltwasser eine vorgegebene, zu ihrer Erwärmung auf eine vorgegebene Brühtemperatur ausreichende Wärmemenge über einen an die Heizvorrichtung angeschlossenen Wärmespeicher mit vorgegebenem Speicherinhalt, durch welchen die vorgegebene Menge Kaltwasser hindurchgeführt wird, genau dosiert zugeführt wird, wobei die Heizvorrichtung temperaturgesteuert derart arbeitet, daß im Stand-By-Betrieb der Wärmespeicher auf einer vorgegebenen Temperatur oberhalb der Brühtemperatur gehalten wird und während der Zuführung der vorgegebenen Menge Kaltwassers zum Wärmespeicher die Heizvorrichtung dem Wärmespeicher fortlaufend Wärme zuführt.

2. Vorrichtung zur Durchführung des Verfahrens nach Anspruch 1 mit einer Dosiereinrichtung (D) zur Erfassung und Abgabe eines vorgegebenen Volumens an Kaltwasser, unabhängig vom momentanen Druck des zugeführten Wassers, die an eine Erhitzungseinrichtung (E) angeschlossen ist, welche eine einen Zulauf (18a) und einen Ablauf (18b) aufweisende Erhitzungskammer (18) besitzt, die an eine Heizvorrichtung angeschlossen ist, dadurch gekennzeichnet, daß Erhitzungseinrichtung (E) in engem thermischem Kontakt mit einem Wärmespeicher (13) mit vorgegebener Wärmekapazität steht, der an die temperaturgesteuerte Heizvorrichtung (24-22a) angeschlossen ist, wobei der Wärmespeicher einen Metallblock (13) aus Aluminium bzw. einer Aluminiumlegierung mit vorgegebener Masse aufweist, in den die Erhitzungskammer (18) eingearbeitet ist und der die Heizelemente (24) der Heizvorrichtung enthält.

3. Vorrichtung nach Anspruch 2, dadurch gekennzeichnet, daß der Metallblock (13) eine Masse von ca. 0,6 kg besitzt, die Erhitzungskammer (18) bei einer Dosiermenge von ca. 150ml ein Volumen von ca. 15ml faßt und die Temperatur des Wärmespeichers (13) im Stand-By-Betrieb ca. 115°C beträgt.

4. Vorrichtung nach Anspruch 2 oder 3, dadurch gekennzeichnet, daß die Erhitzungskammer (18) als in den Metallblock spiralförmig, schraubenlinienförmig oder mäanderförmig eingearbeiteter Durchtrittskanal ausgebildet ist.

5. Vorrichtung nach einem der Ansprüche 2 bis 4, dadurch gekennzeichnet, daß die Dosiereinrichtung (D) gekennzeichnet ist durch einen ersten Zylinder (1), dessen Innenraum an der einen Stirnseite durch eine Abschlußplatte (2) abgeschlossen ist und in dem bewegbar ein Kolben (3) dichtend geführt ist, dessen vordere der Abschlußplatte (2) zugewandte Arbeitsfläche (3a) eine an die Innenfläche (2a) der Abschlußplatte (2) angepaßte Form aufweist, während an der hinteren Arbeitsfläche (3b) des Kolbens (3) ein zweiter Zylinder (4) axial angeordnet ist, dessen Außendurchmesser um einen vorgegebenen Betrag kleiner ist als der Innendurchmesser des ersten Zylinders (1) und der dichtend und bewegbar durch eine den Innenraum des ersten Zylinders (1) an der anderen Stirnseite begrenzende Ringplatte (5) hindurchgeführt ist, wobei eine Flüssigkeitszuleitung (6) über ein 3/2-Wege-Absperrorgan (7) an den als Dosierraum (1a) wirksamen Raum zwischen der vorderen Arbeitsfläche (3a) des Kolbens (3) und der Abschlußplatte (2) und direkt an den als Rückstellraum (1b) wirksamen Raum zwischen den beiden Zylindern (1,4) angeschlossen ist und eine Flüssigkeitsableitung (8) über das 3/2-Wege-Absperrorgan (7) an den Dosierraum (1a) angeschlossen ist und das 3/2-Wege-Absperrorgan (7) so ausgebildet ist, daß es in einer Stellung die Flüssigkeitszuleitung (6) und in der anderen Stellung die Flüssigkeitsableitung (8) mit dem Dosierraum (1a) verbindet.

6. Vorrichtung nach Anspruch 5, dadurch gekennzeichnet, daß der zweite Zylinder (4) fest auf einer Grundplatte (9) montiert ist, an der das 3/2-Wege-Absperrorgan (7) angeordnet ist und der erste Zylinder (1) am Kolben (3) und über die Ringplatte (5) am zweiten Zylinder (4) in axialer Richtung bewegbar geführt ist.

7. Vorrichtung nach Anspruch 6, dadurch gekennzeichnet, daß das 3/2-Wege-Absperrorgan ein Elektromagnetventil (7) ist, welches innerhalb des zweiten Zylinders (4) auf der Grundplatte (9) angeordnet ist, wobei die Flüssigkeitszuleitung (6) und die Flüssigkeitsableitung (8) mindestens teilweise durch die Grundplatte (9) geführt sind und die Verbindungsleitungen (10, 11) vom Elektromagnetventil (7) zum Rückstellraum (1b) und zum Dosierraum (1a) mindestens in den an diese Räume anschließenden Abschnitten (10a, 11a) durch den Kolben (3) geführt sind.

## Claims

1. Method of making coffee in a coffee machine in small measured portions, whereby a preset quantity of water heated by means of a heating apparatus is pressed through a preset quantity of ground coffee, wherein a preset quantity of cold water corresponding substantially to one small portion of coffee is first automatically provided in a precisely dosed manner and supplied to the heating apparatus in a continuous operation, characterized in that the preset quantity of cold water is supplied with a preset quantity of heat, which is sufficient to heat said water quantity up to a preset coffee-making temperature, in a precisely dosed manner by means of a heat accumulator with a preset storage content, which is connected to the heating apparatus and through which the preset quantity of cold water is passed, the heating apparatus operating in a temperature-controlled manner such that, in stand-by operation, the heat accumulator is maintained at a preset temperature above the coffee-making temperature and, during supply of the preset quantity of cold water to the heat accumulator, the heating apparatus continuously supplies heat to the heat accumulator.

2. Device for effecting the method according to claim 1, comprising a dosing device (D) for detecting and dispensing a preset volume of cold water independently of the instantaneous pressure of the supplied water, which device is connected to a heating device (E) comprising a heating chamber (18), which has an inlet (18a) and an outlet (18b) and is connected to a heating apparatus, characterized in that heating device (E) is in close thermal contact with a heat accumulator (13) of a preset heat capacity, which is connected to the temperature-controlled heating apparatus (24-22a), the heat accumulator comprising a metal block (13) made of aluminium or an aluminium alloy and having a preset mass, into which the heating chamber (18) is worked and which contains the heating elements (24) of the heating apparatus.

3. Device according to claim 2, characterized in that the metal block (13) has a mass of around 0.6 kg, the heating chamber (18) given a dosing quantity of around 150 ml has a volume of around 15 ml and the temperature of the heat accumulator (13) in stand-by operation is around 115°C.

4. Device according to claim 2 or 3, characterized in that the heating chamber (18) takes the form of a through-channel worked spirally, helically or in the shape of a meander into the metal block.

5. Device according to one of claims 2 to 4, characterized in that the dosing device (D) is characterized by a first cylinder (1), the interior of which is closed at the one end by a cover plate (2) and in which a piston (3) is movably and sealingly guided, the front working surface (3a) of the piston directed towards the cover plate (2) having a shape adapted to the inside surface (2a) of the cover plate (2) while at the rear working surface (3b) of the piston (3) a second cylinder (4) is axially disposed, the outside diameter of which is a preset amount smaller than the inside diameter of the first cylinder (1) and which extends sealingly and movably through an annular plate (5) which delimits the interior of the first cylinder (1) at the other end, wherein a liquid supply line (6) is connected by a 3/2-way shutoff element (7) to the chamber acting as a dosing chamber (1a) between the front working surface (3a) of the piston (3) and the cover plate (2) and directly to the chamber acting as a resetting chamber (1b) between the two cylinders (1, 4) and a liquid discharge line (8) is connected by the 3/2-way shutoff element (7) to the dosing chamber (1a) and the 3/2-way shutoff element (7) is so designed that, in one position, it connects the liquid supply line (6) and, in the other position, it connects the liquid discharge line (8) to the dosing chamber (1a).

6. Device according to claim 5, characterized in that the second cylinder (4) is mounted firmly on a base plate (9), on which the 3/2-way shutoff element (7) is disposed, and the first cylinder (1) is guided in an axially movable manner on the piston (3) and via the annular plate (5) on the second cylinder (4).

7. Device according to claim 6, characterized in that the 3/2-way shutoff element is a solenoid valve (7) which is disposed inside the second cylinder (4) on the base plate (9), wherein the liquid supply line (6) and the liquid discharge line (8) extend at least partially through the base plate (9) and the connection lines (10, 11) from the electromagnetic valve (7) to the resetting chamber (1b) and to the dosing chamber (1a) extend, at least in the portions (10a, 11a) adjoining said chambers, through the piston (3).

## Revendications

1. Procédé pour préparer du café frais dans un percolateur automatique en petites portions mesurées d'avance, selon lequel une quantité prédéterminée d'eau très chaude, chauffée au moyen d'un dispositif de chauffage, passe sous pression à travers une quantité prédéterminée de café moulu, une quantité d'eau froide prédéterminée, qui correspond sensiblement à une petite portion de café et a été automatiquement dosée, étant dans un premier temps rendue disponible et amenée au dispositif de chauffage en continu, caractérisé en ce qu'à cette quantité prédéterminée d'eau froide est amenée, de manière exactement dosée, une quantité de chaleur suffisante pour chauffer cette quantité d'eau froide jusqu'à une température de percolation prédéterminée au moyen d'un accumulateur de chaleur de contenance prédéterminée, et connecté au dispositif de chauffage, accumulateur à travers lequel on fait passer la quantité prédéterminée d'eau froide, ledit dispositif de chauffage thermo-régulé fonctionnant de telle manière qu'à l'état de veille, l'accumulateur de chaleur est maintenu à une température prédéterminée supérieure à la température de percolation, et que pendant l'amenée de la quantité prédéterminée d'eau froide à l'accumulateur, le dispositif de chauffage amène de manière continue de la chaleur à l'accumulateur.

2. Dispositif pour la mise en oeuvre du procédé conforme à la revendication 1, comportant un dispositif de dosage (D) pour la saisie et l'émission d'un volume prédéterminé d'eau froide, indépendamment de la pression momentanée de cette eau, lequel est raccordé à un dispositif d'échauffement (E), qui possède une chambre d'échauffement (18) présentant une admission (18a) et un échappement (18b), et qui est raccordée à un dispositif de chauffage, caractérisé en ce que le dispositif d'échauffement (E) est en contact thermique étroit avec un accumulateur de chaleur (13) à capacité chauffante prédéterminée, lequel est raccordé au dispositif de chauffage (24, 22a) thermo-régulé, ledit accumulateur de chaleur présentant un bloc métallique (13) en aluminium ou en un alliage d'aluminium de masse prédéterminée, dans lequel est intégrée la chambre d'échauffement (18) et qui contient les éléments chauffants (24) du dispositif de chauffage.

3. Dispositif selon la revendication 2, caractérisé en ce que le bloc métallique (13) a une masse d'environ 0,6 kg, la chambre d'échauffement (18) a un volume d'environ 15 ml pour une quantité de dosage d'environ 150 ml, et que la température de l'accumulateur de chaleur (13) est d'environ 115°C à l'état de veille.

4. Dispositif selon la revendication 2 ou 3, caractérisé en ce que la chambre d'échauffement 18 est réalisée sous la forme d'un canal passant en forme de spirale, de ligne hélicoïdale ou de méandre, intégré par usinage dans le bloc métallique.

5. Dispositif selon l'une des revendications 2 à 4, caractérisé en ce que le dispositif de dosage (D) se distingue par un premier cylindre (1) dont l'espace intérieur est fermé sur l'une des faces frontales par une plaque de fermeture (2), à travers laquelle passe, de manière étanche, un piston mobile (3) dont la face avant active (3a) orientée vers la plaque de fermeture (2) présente une forme ajustée à la face intérieure (2a) de ladite plaque de fermeture (2), tandis que sur la face arrière active (3b) dudit piston (3) est disposé axialement un deuxième cylindre (4) dont le diamètre extérieur est inférieur d'une quantité prédéterminée au diamètre intérieur du premier cylindre (1), et qui passe de manière étanche et mobile à travers une plaque annulaire (5) qui délimite l'espace extérieur du premier cylindre (1) sur l'autre face frontale, tandis qu'une conduite d'alimentation en liquide (6) est raccordée d'une part à travers un organe d'arrêt (7) à 3/2 voies à l'espace servant d'espace de dosage (1a) entre la face active avant (3a) du piston (3) et la plaque de fermeture (2), et d'autre part directement à l'espace servant d'espace de recul (1b) entre les deux cylindres (1,4), une conduite d'échappement (8) du liquide étant raccordée à l'espace de dosage (1a) à travers l'organe d'arrêt (7) à 3/2 voies, lequel organe (7) est conformé de telle manière que dans une position il relie la conduite (6) et dans l'autre position la conduite (8) à l'espace de dosage (1a).

6. Dispositif selon la revendication 5, caractérisé en ce que le deuxième cylindre (4) est monté de manière fixe sur une plaque de base (9) sur laquelle est disposé l'organe d'arrêt (7) à 3/2 voies et que le premier cylindre (1) est guidé de manière mobile en direction axiale sur le piston (3) et, par l'intermédiaire de la plaque annulaire (5), sur le deuxième cylindre (4).

7. Dispositif selon la revendication 6, caractérisé en ce que l'organe d'arrêt à 3/2 voies est une vanne électromagnétique (7) qui est disposée à l'intérieur du deuxième cylindre (4) sur la plaque de base (9), tandis que la conduite d'amenée du liquide (6) et la conduite d'échappement du liquide (8) passent au moins partiellement à travers la plaque de base (9), et que les conduites de liaison (10, 11) entre la vanne électromagnétique (7) et l'espace de recul (1b) et l'espace de dosage (1a) passent, au moins dans les sections (10a, 11a) qui font suite à ces espaces, à travers le piston (3).
